# EUROPEAN PATENT SPECIFICATION

(11) **EP 2 899 287 B1**
(45) Date of publication and mention of the grant of the patent: **07.03.2018**
(21) Application number: 13839895.3
(22) Date of filing: 13.09.2013
(51) Int. Cl.: C22C 21/10, C22C 21/06, C22F 1/047, C22F 1/053, C22F 1/00

(54) **ALUMINUM ALLOY PLATE FOR AUTOMOBILE PART**
ALUMINIUMLEGIERUNGSPLATTE FÜR EIN AUTOMOBILTEIL
PLAQUE D'ALLIAGE D'ALUMINIUM POUR PIÈCE AUTOMOBILE

(30) Priority: 20.09.2012 JP 2012207190; 20.09.2012 JP 2012207192
(43) Date of publication of application: 29.07.2015
(73) Proprietor: Kabushiki Kaisha Kobe Seiko Sho (Kobe Steel, Ltd.), Kobe-shi, Hyogo 651-8585 (JP)
(72) Inventor: ARUGA, Yasuhiro, Nishi-ku, Kobe-shi HYOGO 651-2271 (JP); MATSUMOTO, Katsushi, Nishi-ku, Kobe-shi HYOGO 651-2271 (JP)
(74) Representative: Müller-Boré & Partner Patentanwälte PartG mbB
(86) International application number: PCT/JP2013/074863
(87) International publication number: WO 2014/046047

(56) References cited:
- WO-A1-92/03586
- WO-A1-2010/049445
- WO-A1-2012/059419
- JP-A- 2007 100 157
- JP-A- 2011 038 136
- JP-A- 2011 231 400
- US-A1- 2008 173 378

## Description

The present invention relates to a high-strength aluminum alloy automobile part.

### Background Art

In recent years, from the concerns for the global environment, the social demand for the reduction in the weights of automobile bodies has been increased. In order to respond to such demand, some of automobile body components, such as panels (hoods, doors, roofs and other outer panels and inner panels), bumper reinforcements (bumper R/F), door beams and other reinforcements, aluminum alloy materials have been applied partially in place of iron steel materials such as steel plates.

However, in order to achieve the weight reduction of an automobile body, among automobile parts, the application of aluminum alloy materials need to be extended to automobile structural components such as the frames, pillars which contribute especially to weight reduction. However, these automobile structural components require the 0.2% proof stress of 350 MPa or higher and other conditions, and therefore need to have higher strength than the automobile panels. In this regard, a JIS or AA 6000 series aluminum alloy sheet having excellent formability, strength and corrosion resistance, low alloy composition and recyclability used in the automobile panel is far from achieving the higher strength even by controlling composition and thermal refining (solutionizing process, quenching, and further artificial age hardening treatment).

Therefore, JIS or AA 7000 series aluminum alloy sheets used as the reinforcement for which equally high strength is required need to be used for such high-strength automobile structural components. However, the 7000 series aluminum alloy, which is an Al-Zn-Mg alloy, is an alloy which achieves high strength by causing precipitates MgZn₂ composed of Zn and Mg to distribute at a high density. Hence, it may cause stress corrosion crack (hereinafter referred to as SCC). In order to prevent this, as the actual situation, overage treatment has been inevitably performed on the 7000 series aluminum alloys and they are used at a proof stress of about 300 MPa. This has been sacrificing their features as the high-strength alloys.

Accordingly, various methods of controlling the composition of 7000 series aluminum alloy having both excellent strength and SCC resistance and controlling microstructures of precipitates and the like have been conventionally proposed.

Typical examples of the methods of controlling the composition include patent literature 1 in which, by utilizing the ability of Mg added in an amount excessively higher than the amount (MgZn₂ stoichiometric ratio) of Zn and Mg which form MgZn₂ in just quantities to contribute to increasing the strength of 7000 series aluminum alloy extruded material, Mg is added in an amount excessively higher than stoichiometric ratio of MgZn₂ to suppress the amount of MgZn₂, whereby higher strength is achieved without lowering the SCC resistance.

Typical examples of controlling the microstructures such as precipitates include patent literature 2, in which precipitates having a grain size in crystals of the 7000 series aluminum alloy extruded material after the artificial age hardening treatment of 1 to 15 nm are caused to exist at a density of 1000 to 10000 counts/µm² in the observation results by a transmission electron microscope (TEM), so that the potential difference between grain insides and grain boundaries is reduced and the SCC resistance is improved.

In addition, although all examples cannot be indicated, many examples of controlling the composition, controlling the microstructure of precipitates and the like exist proportionately to the large number of the practices using extruded materials. In contrast, the number of known examples of controlling composition and controlling microstructures of precipitates in a 7000 series aluminum alloy sheet are extremely small proportionately to the small number of practices using plates.

For example, patent literature 3 suggests that in a structural material composed of a clad plate in which two 7000 series aluminum alloy sheets are weld-bonded together, in order to improve the strength, the aged precipitates after the artificial age hardening treatment are caused to exist as spheres with a diameter of 50Å(angstrom) or lower in a certain amount. However, the document has no disclosure about the SCC resistance performance, and shows no data about corrosion resistance in its Examples.

In addition, patent literature 4 describes that in the measurement under an optical microscope of 400 magnification, crystal precipitates in crystals of the 7000 series aluminum alloy sheet after the artificial age hardening treatment are caused to have the size (calculated as the diameter of a circle having an equivalent area) of 3.0 µm or lower, and an average area fraction of 4.5% or lower to improve the strength and elongation.

The controlling of the microstructure and texture of the plate has also been suggested, although the number of such examples is low. For example, in patent literatures 5 and 6, in order to achieve higher strength and high SCC resistance in a 7000 series plate for structural materials, an ingot after being formed is repeatedly rolled in a warm processing range to micronize the microstructure. This is because micronizing the microstructure can limit the amount of high-angle grain boundaries with misorientation of 20° or higher, which may cause a potential difference between grain boundaries and the insides of grains, leading to a reduction in the SCC resistance, in order to obtain a microstructure having 25% or more of low-angle grain boundaries of 3 to 10°. However, such repetition of warm-rolling is performed since such a microstructure having 25% or more of low-angle grain boundaries cannot be obtained by a method involving conventional hot-rolling and cold-rolling. Therefore, it is greatly different from conventional methods in its steps, and therefore it can be hardly regarded as practical for producing plates.

Regarding the controlling of this microstructure and texture, patent literature 7 suggests, although not in a plate of 7000 series aluminum alloy but in an extruded material, a texture configured with a fibrous microstructure composed of subgrains, having the Brass orientation as the main orientation, and having the integration degree to the Brass orientation represented by ODF (orientation distribution function) 10 times higher than that of the random orientation, in order to provide excellent warm workability.

### Citation List

### Patent Literature

Patent literature 1: Japanese Unexamined Patent Publication No. 2011-144396
Patent literature 2: Japanese Unexamined Patent Publication No. 2010-275611
Patent literature 3: Japanese Unexamined Patent Publication No. H9-125184
Patent literature 4: Japanese Unexamined Patent Publication No. 2009-144190
Patent literature 5: Japanese Unexamined Patent Publication No. 2001-335874
Patent literature 6: Japanese Unexamined Patent Publication No. 2002-241882
Patent literature 7: Japanese Unexamined Patent Publication No. 2009-114514

The International publication WO 2010/049445 A1 discloses a 7XXX series alloy sheet having good formability and high strength that has been developed for use in the manufacture of formed structural automotive members.

### Summary of Invention

### Technical Problem

As mentioned above, suggestions for controlling the composition of a 7000 series aluminum alloy having both excellent strength and SCC resistance and controlling the microstructures of precipitates, texture or the like has been conventionally made in special rolling fields such as extruded materials and the above-mentioned hot-rolling. However, a rolled plate produced by a conventional method which is produced by hot-rolling and cold-rolling an ingot after soaking has not been actually suggested other than in a special rolling involving repeated warm-rolling.

Moreover, extruded materials are completely different from the above-mentioned rolled plate in their production steps such as hot working steps. The microstructure of an extruded material is also greatly different from that of a rolled plate in the formed crystals and precipitates. For example, in an extruded material, crystals are in the form of fibers elongated in the direction of extrusion, while in a rolled-plate, the crystals are basically equiaxial grains. Accordingly, it is unknown if the suggestion of controlling the composition in the extruded material and controlling the microstructure such as precipitates can be also directly applied to 7000 series aluminum alloy sheets and automobile structural components composed of this 7000 series aluminum alloy sheets or is effective in improving both strength and SCC resistance. That is, it remains nothing more than anticipation unless it is actually confirmed.

Therefore, any effective technique for controlling the microstructures of the 7000 series aluminum alloy sheet produced by a conventional method which are excellent in both strength and SCC resistance has not yet been implemented, and remains uncertain and to be proved.

In view of the above-mentioned problems, an object of the present invention is to provide a 7000 series aluminum alloy sheet for automobile part having both excellent strength and SCC resistance produced by the above-mentioned conventional method. Solution to Problem

In order to achieve this object, as a purpose of the present invention, the aluminum alloy sheet for automobile part is an Al-Zn-Mg alloy sheet having a composition including, by mass %, Zn: 3.0 to 8.0%, and Mg: 0.5 to 4.0%, with the remainder consisting of Al and inevitable impurities, having an average grain size of 15 µm or lower, an average percentage of low-angle grain boundaries with tilt angles from 5 to 15° of 15% or higher, and an average percentage of high-angle grain boundaries with tilt angles higher than 15° of 15 to 50 %, and/or having an average grain size of 15 µm or lower, and having an average total area fraction of crystals with the Brass orientation, S orientation, and Cu orientation of 30% or higher.

### Advantageous Effects of Invention

The aluminum alloy sheet as mentioned in the present invention refers to a cold-rolled plate which has been produced by soaking an ingot, then hot-rolling and further cold rolling, and further refers to a 7000 series aluminum alloy sheet which is produced by a conventional method such as subjecting to thermal refining such as the solutionizing process. In other words, the present invention does not include such plates that are produced by a special rolling method involving forming an ingot and then repeating warm-rolling for many times, as in patent literatures 5 and 6 mentioned above. Moreover, such a material aluminum alloy sheet is processed into an automobile part.

In the present invention, the microstructure of the 7000 series aluminum alloy sheet produced by such a conventional method is configured with a fibrous microstructure not as a normal equiaxial recrystallized microstructure but as a processed microstructure similar to an extruded material. This is defined as the microstructure having an average grain size of 15 µm or lower, an average percentage of low-angle grain boundaries with tilt angles from 5 to 15° of 15% or higher, and an average percentage of high-angle grain boundaries with tilt angles higher than 15° of 15 to 50 %. By configuring such a microstructure, when the plate is warped, a microstructure in which the warp is not concentrated locally, but transitions uniformly can be formed. This allows even the 7000 series aluminum alloy sheet produced by the conventional method to have such high strength that the 0.2% proof stress is 350 MPa or higher, and also have increased elongation to ensure the formability. In addition, in spite of such high strength, the 7000 series aluminum alloy sheet can have suppressed reduction in the SCC resistance.

In addition, in the present invention, the microstructure of the 7000 series aluminum alloy sheet produced by such a conventional method as not a normal equiaxial recrystallized microstructure but as a processed microstructure similar to the extruded material, is configured with a fibrous microstructure. Moreover, from the perspective of texture, this is defined as having main orientations of the Brass orientation, S orientation, and Cu orientation. By providing such a texture, when the plate is warped, a microstructure in which the warp is not concentrated locally, but transitions uniformly can be formed. This allows even the 7000 series aluminum alloy sheet produced by the conventional method to have such high strength that the 0.2% proof stress is 350 MPa or higher and also have increased elongation to ensure the formability. In addition, in spite of such high strength, the 7000 series aluminum alloy sheet can have suppressed reduction in the SCC resistance.

### Description of Embodiments

Embodiments of the present invention will be specifically described for each requirement.

### Composition of aluminum alloy:

First, the chemical composition of the aluminum alloy sheet will be described below including limiting reasons of each element. It should be noted that the amounts of the elements contained indicated by % are all by mass %.

The chemical components of the aluminum alloy sheet of the present invention are determined to assure the characteristics such as the strength and SCC resistance of automobile parts intended in the present invention as the Al-Zn-Mg-Cu-based 7000 series aluminum alloy. From this perspective, the chemical components of the aluminum alloy sheet of the present invention includes, by mass %, Zn: 3.0 to 8.0%, and Mg: 0.5 to 4.0%, with the remainder consisting of Al and inevitable impurities. This composition may further include one or two elements from Cu: 0.05 to 0.6% and Ag: 0.01 to 0.15% selectively, and in addition, separately, may include one or more elements from Mn: 0.05 to 0.3%, Cr: 0.03 to 0.2%, and Zr: 0.03 to 0.3% selectively.

### Zn: 3.0 to 8.0%:

An essential alloy element Zn, as well as Mg, forms fine precipitates to improve the strength. When the amount of Zn contained is lower than 3.0% by mass, the strength becomes insufficient, while when the amount is higher than 8.0% by mass, a grain boundary precipitate MgZn2 increases to sharpen the SCC sensitivity. Therefore, the amount of Zn contained is to be in the range from 3.0 to 8.0%, and preferably in the range from 5.0 to 7.0%. In order to prevent an increase in the amount of Zn contained and sharpening of the SCC sensitivity, it is desirable to add Cu or Ag described later.

### Mg: 0.5 to 4.0%

An essential alloy element Mg, as well as Zn, forms fine precipitates to improve strength and elongation. When the amount of Mg contained is lower than 0.5%, the strength becomes insufficient, while when the amount is higher than 4.0% by mass, the rolling property of the plate lowers, and the SCC sensitivity is increased. Therefore, the amount of Mg contained is to be in the range from 0.5 to 4.0%, and preferably in the range from 0.5 to 1.5%.

### One or two elements from Cu: 0.05 to 0.6%, and Ag: 0.01 to 0.15%:

Cu and Ag act to improve the SCC resistance of the Al-Zn-Mg-based alloy. When either or both of these are contained, if the amount of Cu contained is lower than 0.05%, and the amount of Ag contained is lower than 0.01%, little effects in improving the SCC resistance are produced. In contrast, when the amount of Cu contained is higher than 0.6%, various characteristics such as the rolling property and weldability are lowered on the contrary. When the amount of Ag contained is higher than 0.15%, the effects of Ag are saturated, resulting in increased costs. Therefore, the amount of Cu contained is to be 0.05 to 0.6%, preferably 0.4% or lower, and the amount of Ag contained is to be 0.01 to 0.15%.

### One or more elements of Mn: 0.05 to 0.3%, Cr: 0.03 to 0.2%, and Zr: 0.03 to 0.3%:

Mn, Cr and Zr contribute to increasing the strength by micronizing crystals of the ingot.

When any one, two or three elements of these are contained, if the amounts of Mn, Cr, and Zr contained are all below the lower limits, the amounts contained become insufficient, and recrystallization is promoted, so that the SCC resistance lowers. In contrast, when the amounts of Mn, Cr, and Zr contained are higher than their upper limits, respectively, coarse precipitates are formed and therefore elongation is lowered. Therefore, the ranges of the elements contained are to be as follows: Mn: 0.05 to 0.3%, Cr: 0.03 to 0.2%, and Zr: 0.03 to 0.3%.

### Ti, B:

Ti and B are impurities in a rolled plate, but are effective in micronizing crystals of the aluminum alloy ingot. Therefore, they are allowed to be contained within the ranges defined by the JIS standard as the 7000 series alloy, respectively. The upper limit of Ti is to be 0.2%, preferably 0.1%, the upper limit of B is to be 0.05% or lower, and preferably 0.03%.

### Other elements:

In addition, other elements such as Fe and Si than those described above are inevitable impurities. Therefore they are allowed to be contained within the ranges defined by the JIS standard of the 7000 series alloy, respectively, as melting materials, in addition to pure aluminum base metal, anticipating (allowing) the inclusion of these impurity elements due to the use of aluminum alloy scrap. For example, when Fe: 0.5% or lower, and Si: 0.5% or lower, the characteristics of the rolled plate according to the present invention aluminum alloy are not affected, and such inclusion is therefore allowed.

### Microstructure:

In the microstructure of the 7000 series aluminum alloy sheet of the present invention, as its premise, as well as a normal 7000 series aluminum alloy sheet, the above-mentioned composition and the production method by the conventional method allows a large number of precipitates of minute nano-level sizes to exist in crystals, so that basic characteristics such as the strength and SCC resistance are achieved. These precipitates are intermetallic compounds (composition: MgZn2, etc.) formed by Mg and Zn produced in crystals, and also a fine dispersed phase which contains inclusion elements such as further Cu, Zr depending on the above-mentioned composition.

### Average grain size and percentage of grain boundaries:

To this end, in order to achieve even higher strength and improvement in characteristics such as the SCC resistance, the microstructure of the 7000 series aluminum alloy sheet of the present invention is to be a fibrous fine processed microstructure in which the average grain size is 15 µm or lower. In addition, this fibrous fine processed microstructure has an average percentage of low-angle grain boundaries with tilt angles from 5 to 15° of 15% or higher, and an average percentage of high-angle grain boundaries with tilt angles higher than 15° of 15 to 50 %.

As mentioned above, by providing a fibrous and fine processed microstructure in which the low-angle grain boundaries exist at a constant percentage and a constant percentage of the high-angle grain boundaries coexists, even in a 7000 series aluminum alloy sheet produced by a conventional method, a microstructure which allows, when the plate is warped, the warp to be not concentrated locally but allows the plate to be uniformly deformed can be provided. Accordingly, local rupture can be prevented, such high strength that the 0.2% proof stress is 350 MPa or higher is achieved, and also have increased elongation to ensure the formability. In addition, in spite of such high strength, the 7000 series aluminum alloy sheet can have suppressed reduction in the SCC resistance.

In contrast, if these requirements are not met, that is, if the average grain size is higher than 15 µm, the average percentage of the low-angle grain boundaries is lower than 15%, or the average percentage of the high-angle grain boundaries is lower than 15%, higher strength cannot be achieved and elongation is lowered, so that the formability is lowered.

The low-angle grain boundary referred to in the present invention is, among the crystal orientations measured by the SEM/EBSP method described later, a grain boundary between crystals whose difference (tilt angle) of the crystal orientations is as low as 5 to 15°. In addition, the high-angle grain boundary referred to in the present invention is a grain boundary with this difference in crystal orientation (tilt angle) being higher than 15° and 180°or lower. Herein, grain boundaries with the difference in orientation lower than 2 to 5° have very little effect in or influence on achieving higher strength, and are therefore not considered or defined in the present invention.

In the present invention, the percentage of low-angle grain boundaries with tilt angles of 5 to 15° is defined as the percentage of the total length of the grain boundaries of the measured low-angle grain boundaries (the total length of all the low-angle grains measured) in the overall length of the grain boundaries with misorientations of 2 to 180° (the total length of the grain boundaries of all the grains measured) measured likewise. That is, the defined percentage (%) of the defined low-angle grain boundaries with tilt angles of 5 to 15° can be calculated as [(total length of grain boundaries with tilt angles of 5 to 15°) /(total length of grain boundaries with tilt angles of 2 to 180°)]×100, and the average of these values is to be 15% or higher. It should be noted that from the limitation of production, the upper limit of the percentage of the low-angle grain boundaries with tilt angles of 5 to 15° is about 60%.

Likewise, as for the average percentage of high-angle grain boundaries, the percentage of the high-angle grain boundaries with tilt angles higher than 15° is defined as the percentage of the overall length of the grain boundaries of the high-angle grain boundaries measured (the total length of all the low-angle grain boundaries measured) in the overall length of grain boundaries with misorientation of 2 to 180° measured likewise (the total length of the grain boundaries of all the grains measured). That is, the percentage (%) of the defined high-angle grain boundaries can be calculated as [(total length of the grain boundaries over 15° but 180°or lower) /(total length of grain boundaries from 2 to 180°)]×100, and the average of these values is to be in the range from 15 to 50 %.

### Measurement of grain size and percentage of grain boundaries:

These average grain size and the average percentages of grain boundaries (low-angle grain boundaries and high-angle grain boundaries) defined in the present invention are both measured by the SEM/EBSP method. The measurement site of the microstructure of the plate in this case is to be a cross section in the width direction of this plate, as is normally the case in the measurement site of microstructures of this type. Moreover, the average of the measurement values of five measurement specimens (five measurement portions) collected from any given portion in a cross section in the width direction of this plate is set to be the average percentage of the average grain size defined in the present invention and the low-angle grain boundaries and high-angle grain boundaries (grain boundaries).

The SEM/EBSP method is generally used as the measurement method of textures, which is a crystal orientation analysis method using a field-emission scanning electron microscope (FESEM) with an electron back scattering (Scattered) pattern system (EBSP) mounted on. This measurement method has higher resolution and thus higher measurement accuracy than other measurement methods of textures. Moreover, this method can advantageously measure the average grain size and average percentage of grain boundaries of the same measurement site of the plate simultaneously at high accuracy. Performing the measurement of the average percentage of grain boundaries and average grain size of the aluminum alloy sheet by this SEM/EBSP method has been conventionally known in, for example, Japanese Unexamined Patent Publication No. 2009-173972, or the above-mentioned patent literatures 5 and 6, among others. This known method is also employed in the present invention.

In these disclosed methods of SEM/EBSP, a sample of the Al alloy sheet set in a lens-barrel of the above-mentioned FESEM (FE-SEM) is irradiated with an electron beam to project the EBSP on a screen. This is photographed with a high sensitivity camera and captured as an image into a computer. The computer analyzes this image, and by comparing this image with a pattern by means of a simulation using a known crystal system, the orientation of the crystals is determined. The calculated orientation of crystals is recorded as a three-dimensional Eulerian angle along with position coordinates (x, y) and other data. Since this process is automatically performed for all measurement points, crystal orientation data of a few ten thousand to hundred thousand points can be obtained at the end of the measurement.

### Texture:

Thus, in order to achieve even higher strength and improvement in characteristics such as the SCC resistance, the microstructure of the 7000 series aluminum alloy sheet of the present invention is to be a fibrous fine processed microstructure in which the average grain size is 15 µm or lower. In addition, this fibrous fine processed microstructure is a texture having the "total area fraction", which is the average total area fraction of crystals in the Brass orientation, S orientation, and Cu orientation, that is, the sum and average of the area fractions of crystals having these orientations of 30% or higher.

A 7000 series aluminum alloy sheet having such a texture, even if it is produced by a conventional method, can have a microstructure which allows the plate, when warped, to be uniformly deformed while avoiding local concentration of warping. Accordingly, it prevents local rupture, achieves such high strength that the 0.2% proof stress is 350 MPa or higher and also increases elongation to ensure the formability. In addition, in spite of such high strength, the 7000 series aluminum alloy sheet can have suppressed reduction in the SCC resistance. Herein, these grain size and the area fractions of crystals with the respective orientations of the Brass orientation, S orientation, and Cu orientation defined in the present invention are measured by the EBSP method described later (in case of an area fraction, the area fractions of crystals with these orientations are totalized).

Such a fibrous microstructure having the Brass orientation, S orientation, and Cu orientation and an average total area fraction of crystals of 30% or higher is the 7000 series aluminum alloy sheet microstructure after being produced by the above-mentioned conventional method and subjected to a solutionizing process. This is a processed microstructure of the plate which is more like the processed microstructure of the above-mentioned extruded material, so to speak, and is normally completely different from an equiaxial recrystallized microstructure which is the microstructure of the 7000 series aluminum alloy sheet after being produced by the above-mentioned conventional method and subjected to the solutionizing process. In other words, in such a normal equiaxial recrystallized microstructure, crystals having the cube orientation are the main components, so that the average total area fraction of crystals with the Brass orientation, S orientation, and Cu orientation necessarily becomes lower than 30%. In addition, the average grain size necessarily becomes higher than 15 µm. Accordingly, in particular the strength and SCC resistance become low.

In addition, the upper limit of the average total area fraction of crystals with the Brass orientation, S orientation, and Cu orientation is about 90% due to the manufacturing limit. Theoretically, the production is possible up to 100%, but in order to increase the average total area fraction of these orientations, as will be described later, the cold rolling ratio is increased, for example. However, when this cold rolling ratio is too high, the plate is excessively processed, warping is introduced to an excessive degree, and recrystallization after the solutionizing process is promoted on the contrary, whereby coarse equiaxial recrystallized microstructure is formed. The crystal orientations of these recrystallized microstructures are different from the Brass orientation, S orientation, and Cu orientation, and therefore it is normally very unlikely that the average total area fraction of crystals with the respective orientations of the Brass orientation, S orientation, and Cu orientation becomes higher than 90%. Therefore, the average total area fraction of crystals with the respective orientations of the Brass orientation, S orientation, and Cu orientation is to be preferably 90% or lower.

### Measurement of texture:

These average grain size and average total area fractions of crystals with the Brass orientation, S orientation, and Cu orientation defined in the present invention are measured by the EBSP method.

The measurement site of the microstructure of the plate is to be a cross section in the width direction of this plate, as is normally the case in measurement site of microstructures of this type. Moreover, the average of the measurement values of five measurement specimens (five measurement portions) collected from any given portion in a cross section in the width direction of this plate are set to be the average grain size and the average total area fraction of crystals with the Brass orientation, S orientation, and Cu orientation defined in the present invention.

The above-mentioned SEM/EBSP method is generally used as the measurement method of the texture, which is a crystal orientation analysis method using a field-emission scanning electron microscope (FESEM) with an electron back scattering (Scattered) pattern system (EBSP) mounted on. This measurement method has higher resolution and thus higher measurement accuracy than other measurement methods of textures. Moreover, this method can advantageously measure the average grain size of the same measurement site of the plate simultaneously at high accuracy. Performing the measurement of the texture and average grain size of the aluminum alloy sheet by the EBSP method itself has been conventionally known in publications, for example, Japanese Unexamined Patent Publication No. 2008-45192, Japanese Patent No. 4499369, Japanese Unexamined Patent Publication No. 2009-7617, or patent literatures 5 and 6 mentioned above. This known method is also employed in the present invention.

In these disclosed EBSP methods, a sample of the Al alloy sheet set in a lens-barrel of the above-mentioned FESEM (FE-SEM) is irradiated with an electron beam to project the EBSP on a screen. This is photographed with a high sensitivity camera and captured as an image into a computer. The computer analyzes this image, and by comparing this image with a pattern by means of a simulation using a known crystal system, the orientation of the crystals is determined. The calculated orientation of crystals is recorded as a three-dimensional Eulerian angle along with position coordinates (x, y) and other data. Since this process is automatically performed for all measurement points, crystal orientation data of a few ten thousand to hundred thousand points can be obtained at the end of the measurement.

As mentioned above, the SEM/EBSP method has the advantage that it allows a wider observation vision field than the electron beam diffraction method using a transmission electron microscope, and that the average grain sizes on a few hundred or more of crystals, the standard deviation of the average grain sizes, or the information of the orientation analysis can be obtained within a few hours. In addition, the measurement is not performed for every crystal, but is performed by scanning a specified region at optional regular intervals, and therefore the above-described pieces of information relating to the above number of measurement points covering the entire measurement region can be advantageously obtained. The details of these crystal orientation analysis methods in which the EBSP system is incorporated into the FESEM are described in Kobe Steel Engineering Reports /Vol.52 No.2 (Sep.2002) P66-70 and other documents in detail.

Herein, in the case of the aluminum alloy sheet, normally textures including a number of orientation factors (crystals with these orientations) as shown below, which are referred to as the cube orientation, Goss orientation, Brass orientation (hereinafter also referred to as B orientation), Cu orientation (hereinafter also referred to as Copper orientation), and S orientation, are formed, and there exist crystal planes corresponding to those orientations. These facts are described in, for example, "Textures" (published by Maruzen Co., Ltd.) edited by Shinichi Nagashima and "Light Metals" Explanation Vol.43, 1993, P285-293 by Japan Inst. of Light Metals and other literature.

The formation of these textures is different depending on the processing and heat treatment method even in the case of the same crystal systems. In the case of the texture of a plate material formed by rolling, the texture is represented by the rolling plane and rolling direction, where the rolling plane is represented by {ABC}, and the rolling direction is represented by <DEF> (ABCDEF each represent an integer). Based on such representation, the respective orientations are represented as below.
Cube orientation {001}<100>
Goss orientation {011}<100>
Rotated-Goss orientation {011}<011>
Brass orientation (B orientation) {011}<211>
Cu orientation (Copper orientation) {112}<111>
(or D orientation {4411}< 11118>
S orientation {123}<634>
B/G orientation {011}<511>
B/S orientation {168}<211>
P orientation {011}<111>

In the present invention, basically, grain boundaries having a shift (tilt angle) in orientation lower than ±5° from these crystal planes are considered to belong to the same crystal plane (orientation factor). In addition, the boundary of adjacent crystals with difference in orientation (tilt angle) being 5° or higher is defined as a grain boundary.

Moreover, by using the above-mentioned crystal orientation analysis method in which the EBSP system is mounted on FESEM, the texture of the above-mentioned plate was measured, and the average total area fractions of the crystal orientations of the Brass orientation, S orientation, and Cu orientation defined in the present invention were calculated. At this time, with the total area of the respective crystal orientations (all crystal orientations) from the above-described Cube orientation to the P orientation being 100, the total area fraction of the orientations defined in the present invention were calculated.

It should be noted that the average grain size is also measured and calculated at grain boundaries with tilt angles of 5° or higher. In other words, in the present invention, a shift in the orientation lower than ±5° is defined to belong to the same crystal, and assuming that the boundary of adjacent crystals with difference in orientation (tilt angle) being 5°or higher is defined as a grain boundary, the average grain size was calculated by the following equation. The average grain size =(Σx) /n (wherein n represents the number of crystals measured, and x represents the respective grain size).

In performing these measurements, a cross section in the width direction of the target cold-rolled plate after the solutionizing process was mechanically polished, and further electrolytically polished following the buffing, preparing a sample with an adjusted surface. Thereafter, crystal orientation measurement and grain size measurement were performed by the EBSP using the FESEM. As the EBSP measurement / analysis system, EBSP: manufactured by TSL (OIM) was used.

### (Production method)

The method for producing the 7000 series aluminum alloy rolled plate in the present invention will be specifically described below.

In the present invention, the 7000 series aluminum alloy rolled plate can be produced by a production method according to normal manufacturing steps of the 7000 series aluminum alloy rolled plate. That is, the aluminum alloy rolled plate is produced through normal manufacturing steps including casting (DC casting process, continuous casting method), homogenizing heat treatment, and hot-rolling, formed into an aluminum alloy hot-rolled plate with a gauge of 1.5 to 5.0 mm. The aluminum alloy hot-rolled plate may be the final product plate at this stage, or may be further cold-rolled while being selectively subjected to one or more intermediate annealings before the cold rolling or during the cold rolling, to be formed into a final product cold-rolled plate with a gauge of 3 mm or less.

In addition, in the present invention, the method for producing by a normal manufacturing process of the 7000 series aluminum alloy sheet can be employed. That is, the 7000 series aluminum alloy sheet is produced through normal manufacturing processes of casting (DC casting process, continuous casting method), homogenizing heat treatment, and hot-rolling, and formed into an aluminum alloy hot-rolled plate with a gauge of 1.5 to 5.0 mm. Then, the plate is cold-rolled to be formed into a cold-rolled plate with a gauge of 3 mm or lower. At this time, prior to the cold rolling or in the course of the cold rolling, intermediate annealing may be selectively performed once or more.

### (Melting, casting cooling rate)

First, in the melting, casting step, the aluminum alloy molten metal which has been melt and adjusted within the composition range of the above 7000 series composition is cast by a suitably selected normal melting casting method such as the continuous casting method, semi-continuous casting method (DC casting process).

### (Homogenizing heat treatment)

Next, the cast aluminum alloy ingot is subjected to, prior to the hot-rolling, a homogenizing heat treatment. The aim of this homogenizing heat treatment (soaking) is to homogenize the microstructure, that is, to remove the segregation of crystals in the ingot microstructure. The homogenizing heat treatment conditions are suitably selected from the temperature range from about 400 to 550°C and the homogenization time range of 2 hours or more.

### (Hot-rolling)

The hot-rolling itself becomes difficult under such conditions that the hot rolling starting temperature is higher than the solidus line temperature since burning occurs. In addition, when the hot rolling starting temperature is lower than 350°C, the load during the hot rolling becomes too high, and the hot rolling itself becomes difficult. Therefore, the hot rolling is performed at the hot rolling starting temperature selected from the range from 350°C to the solidus line temperature, giving a hot-rolled plate with a gauge of about 2 to 7 mm. The annealing (rough annealing) of this hot-rolled plate before the cold rolling is not always necessary, but may be performed.

### (Cold rolling)

In the cold rolling, the above hot-rolled plate is rolled, producing a cold-rolled plate (including a coil) with a desired final gauge of about 1 to 3 mm. An intermediate annealing may be performed between the cold rolling passes.

However, the cold-rolling ratio is important to cause a texture to be a fine fibrous microstructure having the average grain size of 15 µm or lower and having an average total area fraction of crystals with the Brass orientation, S orientation, and Cu orientation of 30% or higher. A preferred cold-rolling ratio for this purpose is the range from 30% or higher to 95% or lower.

If the cold-rolling ratio is too low, i.e., lower than 30%, processing is not introduced into the plate and warping is not incorporated, which prevents the formation of a processed microstructure, and causes the microstructure after the solutionizing process to be an equiaxial recrystallized microstructure. Accordingly, the microstructure after the solutionizing process cannot be a fibrous fine microstructure with an average grain size of 15 µm or lower. In addition, it cannot be a texture with an average total area fraction of crystals with the Brass orientation, S orientation, and Cu orientation of 30% or higher. As a result, the strength and SCC resistance are lowered.

In contrast, if the cold-rolling ratio increases excessively to over 95%, the plate is excessively processed, warping is introduced to an excessive degree, and recrystallization after the solutionizing process is promoted on the contrary, whereby a coarse equiaxial recrystallized microstructure is formed. Accordingly, as already described, the microstructure after the solutionizing process cannot be a fibrous fine microstructure with an average grain size of 15 µm or lower. In addition, it cannot be a texture with an average total area fraction of crystals with the Brass orientation, S orientation, and Cu orientation of 30% or higher. As a result, as already described, the strength and SCC resistance are lowered.

### (Solutionizing process)

After the cold rolling, a solutionizing process is performed as thermal refining. This solutionizing process may be heating and cooling by a normal continuous heat treatment line, and is not particularly limited. However, in order to obtain sufficient amounts of solid-solutionized elements and micronize crystals, it is desirable to set the solutionizing temperature to 450 to 550°C.

It is desirable that the heating (temperature rising) rate during the solutionizing process is in the range from 0.01°C/s or higher to 100°C/s or lower in average. When the average heating rate is too low, i.e., lower than 0.01°C/s coarse crystals are formed, and the microstructure after the solutionizing process cannot be a fibrous fine microstructure with an average grain size is 15 µm or lower. In addition, the microstructure cannot be a microstructure with the average percentage of the high-angle grain boundaries with tilt angles higher than 15° of 15 to 50 %, and, the average percentage of the low-angle grain boundaries with tilt angles ranging from 5 to 15°of 15% or higher. As a result, the strength and SCC resistance are lowered. In contrast, due to the limit of the equipment capacity of the solutionizing process furnace, the average heating rate cannot be increased to higher than 100°C/s.

In addition, the average cooling (temperature fall) rate after the solutionizing process is desirably 1°C/s or higher and 500°C/s or lower. When the average cooling rate is excessively low, i.e., lower than 1°C/s, coarse recrystallization occurs, and the microstructure after the solutionizing process cannot be a fibrous fine microstructure with an average grain size of 15 µm or lower. In addition, the microstructure cannot be a microstructure with the average percentage of the high-angle grain boundaries with tilt angles higher than 15°of 15 to 50 %, and the average percentage of the low-angle grain boundaries having the tilt angle ranging from 5 to 15° of 15% or higher. Moreover, coarse grain boundary precipitates which lower the strength and formability are also formed. As a result, the strength and SCC resistance are lowered.

In contrast, due to the limit of the equipment capacity of the solutionizing process furnace, the average cooling rate cannot be increased to higher than 500°C/s. To ensure this cooling rate, the cooling after the solutionizing process employs air cooling such as fans, water cooling means such as mist, spray, immersing, and other compulsory cooling means and conditions, selected respectively. Although the solutionizing process is basically performed once, in case where the aging at room temperature is prolonged and the strength of the material is increased, the solutionizing process may be performed again under the above-mentioned preferable conditions to ensure the formability, so that this excessively promoted aging hardening at room temperature is temporarily cancelled.

In addition, it is desirable that the heating (temperature rising) rate during the solutionizing process is in the range from 0.01°C/s or higher to 100°C/s or lower in average. When the average heating rate is too low, i.e., lower than 0.01°C/s, coarse crystals are formed, and the microstructure after the solutionizing process cannot be a fibrous fine microstructure with an average grain size of 15 µm or lower. In addition, it cannot be a texture with an average total area fraction of crystals with the Brass orientation, S orientation, and Cu orientation of 30% or higher. As a result, the strength and SCC resistance are lowered. In contrast, due to the limit of the equipment capacity of the solutionizing process furnace, the average heating rate cannot be increased to higher than 100°C/s.

It should be noted that the average cooling (temperature fall) rate after the solutionizing process is not particularly critical, and the cooling after the solutionizing process employs air cooling such as fans, water cooling means such as mist, spray, immersing, and other compulsory cooling means and conditions, selected respectively. Although the solutionizing process is performed basically once, in case where the aging at room temperature is promoted excessively, the solutionizing process may be performed again under the above-mentioned preferable conditions to ensure the formability into automobile parts, so that this excessively promoted aging hardening at room temperature is temporarily cancelled.

Moreover, the aluminum alloy sheet of the present invention is formed and processed into an automobile part as a material, and assembled as an automobile part. In addition, after being formed and processed into the automobile part, it is subjected to artificial age hardening treatment separately, and processed into an automobile part or an automobile body.

### Artificial age hardening treatment:

The 7000 series aluminum alloy sheet of the present invention is given desired strength as an automobile part by the above-mentioned artificial age hardening treatment. It is preferable to perform this artificial age hardening treatment after the forming process of the material 7000 series aluminum alloy sheet into an automobile part. The 7000 series aluminum alloy sheet after the artificial age hardening treatment is given higher strength, but its formability is lowered, and it may not be able to be formed depending on the complicated shape of the automobile part in some cases.

The temperature and time conditions of this artificial age hardening treatment are freely determined depending on the desired strength and the strength of the material 7000 series aluminum alloy sheet, the degree of progress of the aging at room temperature and other conditions. Examples of the conditions of the artificial age hardening treatment include, in the case of a single-stage aging, performing the aging treatment at 100 to 150°C for 12 to 36 hours (including over-aging region). In addition, in a two-stage step, the heat treatment temperature of the first stage is selected from the range from 70 to 100°C and 2 hours or more, and the heat treatment temperature of the second stage is selected from the range from 100 to 170°C and 5 hours or more (including over-aging region).

### Examples

Many variants of the microstructure of a cold-rolled plate of a 7000 series aluminum alloy having the composition of constituents shown in Table 1 below were evaluated for the relationship between their mechanical characteristics such as strength and the SCC resistance. The results are shown in Table 2 below.

In addition, many variants of the texture of a cold-rolled plate of the 7000 series aluminum alloys having the compositions of constituents, respectively, shown in Table 3 were evaluated for the relationship between their mechanical characteristics such as strength and the SCC resistance. These results are shown in Table 4 below.

As for the microstructure of the cold-rolled plate mainly, the average heating rate and average cooling rate during the solutionizing process shown in Table 2 were controlled. More specifically, in all Examples, 7000 series aluminum alloy molten metals having the compositions of constituents shown in Table 1 below were cast by the DC casting, obtaining ingots each sizing 45 mm in thickness × 220 mm in width ×145 mm in length. These ingots were subjected to a homogenizing heat treatment at 470°C x 4 hours, and then hot-rolled using this temperature as a starting temperature, producing hot-rolled plates having a gauge of 5.0 mm. These hot-rolled plates were cold-rolled without subjecting to rough annealing (annealing) or subjecting to intermediate annealing between passes, giving cold-rolled plates commonly having a gauge of 2.0 mm.

In addition, as for the textures of cold-rolled plates, mainly, the cold-rolling ratio and the average heating rate during the solutionizing process shown in Table 4 were controlled. More specifically, in all Examples, the 7000 series aluminum alloy molten metals having the compositions of constituents, respectively, shown in Table 3 below were cast by the DC casting, obtaining ingots each sizing 45 mm in thickness × 220 mm in width ×145 mm in length. These ingots were subjected to a homogenizing heat treatment at 470°C × 4 hours, and then hot-rolled using this temperature as a starting temperature, producing hot-rolled plates having a gauge from 2.5 to 25 mm to change the cold-rolling ratio. These hot-rolled plates were cold-rolled without subjecting to rough annealing (annealing) or subjecting to intermediate annealing between passes, giving cold-rolled plates commonly having a gauge of 2.0 mm.

These cold-rolled plates were subjected to a solutionizing process for 500°C ×30 seconds as well as examples shown in Table 1, the average heating (temperature rising) rate to this solutionizing process temperature and the average cooling (temperature fall) rate from this temperature were variously adjusted as shown in Table 2. Specimens were collected from the aluminum alloy sheets after this solutionizing process, and their microstructures were examined in the manner described below. The results are shown in Table 2.

In addition, these cold-rolled plates were subjected to a solutionizing process at 500°C × 30 seconds as well as examples shown in Table 3. The average heating (temperature rising) rate to this solutionizing process temperature and the average cooling

(temperature fall) rate from this temperature were variously adjusted as shown in Table 4. It should be noted that the average cooling (temperature fall) rate after the solutionizing process was set to be 50 to 80°C/s commonly in each of examples. Sheet-like specimens were collected from the aluminum alloy sheets after this solutionizing process, and the textures were examined in the manner described below. The results are shown in Table 4.

### (Average percentage of grain boundaries, average grain size)

The measurement of the average grain size and the average percentage of grain boundaries of the specimens after the solutionizing process was performed for the microstructure of cross sections of the width direction of the plates by the above-mentioned measurement method.

### (Texture, average grain size)

The measurement of the texture and the average grain sizes of the plate-like specimens after the solutionizing process was performed by the above-mentioned measurement method on the microstructures of cross sections of the width direction of the plates.

Moreover, using an SEM (JEOL JSM 6500F) manufactured by Japan Electro Optical Laboratory having an EBSP measurement / analysis system (OIM) manufactured by TSL mounted thereon, the measurement of the percentage (%) of grain boundaries and average grain size (µm) in these microstructures was performed. In each Example, as mentioned above, this measurement was performed on five specimens collected from given portions of cross sections of the width direction of the plates, respectively, and these measurement values were averaged respectively. The measurement regions of the specimens were commonly set to be regions sizing 400 µm in the rolling direction and in the depth of 100 µm in the thickness direction of the plates from the outermost layer on cross sections parallel to the rolling direction, and the intervals of the measurement steps were commonly set to be 0.4 µm.

In addition, using an SEM (JEOL JSM 6500F) manufactured by Japan Electro Optical Laboratory having an EBSP measurement / analysis system (OIM) manufactured by TSL mounted thereon, the measurement of the average total area fraction (%) and average grain size (µm) of crystals with the Brass orientation, S orientation, and Cu orientation in these textures was performed. In each Example, this measurement was performed on five specimens collected from given portions of cross sections of the width direction of the plates, respectively. and these measurement values were averaged respectively. The measurement regions of the specimens were commonly set to be regions sizing 400 µm in the rolling direction and in the depth of 100 µm in the thickness direction of the plates from the outermost layer on cross sections parallel to the rolling direction, and the intervals of the measurement steps were commonly set to be 0.4 µm.

In addition, simulating the artificial age hardening treatment after forming and processing into an automobile part, the aluminum alloy sheets after this solutionizing process, were subjected to artificial age hardening treatment under the common conditions of 120°C × 24 hours. Specimens were collected from given portions of the thus-obtained aluminum alloy sheets after the artificial age hardening treatment, and their mechanical characteristics and corrosion resistance were examined in the manner described below. These results are also shown in Table 2 and Table 4, respectively.

### (Mechanical characteristics)

In each of examples the specimens after the artificial age hardening treatment were subjected to room-temperature tensile tests in the direction perpendicular to the direction of rolling to measure their tensile strength (MPa), 0.2% proof stress (MPa), and total elongation (%). The room-temperature tensile tests were performed at room temperature, i.e., 20°C, according to JIS2241 (1980). The tensile rate was 5 mm / min., and the specimens were pulled at a constant rate until they were ruptured.

### (Fine precipitates)

Examples shown in Table 1, for information, were observed under a transmission electron microscope of 300000 magnifications, and were measured for their average number densities (count/µm²) of precipitates sizing 2.0 to 20 nm within crystals. In addition, in any of Examples shown in Table 3, for information, cross sections at the center of the plate thickness, i.e., a portion 1/2 t depth similarly from the surface of the plate-like specimens after the artificial age hardening treatment were observed under a transmission electron microscope of 300000 magnifications, and were measured for their average number densities (count/µm²) of precipitates sizing 2.0 to 20 nm within crystals. This observation was performed on five specimens, and the number densities of precipitates sizing 2.0 to 20 nm within crystals were determined and averaged (average number density), respectively. Accordingly, in all the invention examples, the number densities of precipitates sizing 2.0 to 20 nm were in the range from 2 to 9 ×10⁴ count /µm³ in average. Herein, the size of precipitates measured as the diameters of circles having equivalent areas.

### (SCC resistance)

To evaluate the SCC resistance of the specimens after the artificial age hardening treatment, stress corrosion crack resistance tests were performed by the chromic acid promoting method. A 4% strain load was applied to specimens in the direction perpendicular to the direction of rolling, age hardening treatment was performed at 120°C for 24 hours. The specimens were then immersed in a test solution at 90°C for 10 hours at maximum, and the SCC was visually observed. It should be noted that stress load produces tensile stress on the outer surfaces of the specimens by tightening the bolt and nut of a jig, and the load strain was measured by a strain gauge adhered onto this outer surface. In addition, the test solution was prepared by adding 36 g of chromium oxide, 30 g of potassium dichromate, and 3 g of sodium chloride (per liter) in distilled water. The samples on which no SCC was generated were evaluated as o, while those on which SCC was generated in up to 10 hours were evaluated as ×.

As can be clearly seen from Tables 1 and 2, all invention examples are within the range of the aluminum alloy compositions of the present invention, and are produced with the cold-rolling ratios and the average heating rate and average cooling rate during the solutionizing process being within the above-mentioned preferable ranges. As a result, the aluminum alloy sheets have, as the microstructures after the solutionizing process, the average grain size is 15 µm or lower, the average percentage of the low-angle grain boundaries with tilt angles from 5 to 15° is 15% or higher, and the average percentage of the high-angle grain boundaries with tilt angles higher than 15° is 15 to 50 %. As a result, they each have the 0.2% proof stress after the artificial aging treatment of 350 MPa or higher, and preferably 400 MPa or higher, and has excellent SCC resistance. Herein, it is preferable that the total elongation is, as for automobile part, 13.0% or higher.

In contrast, Comparative Examples have the alloy composition, as shown in Table 1, falling outside the range of the present invention. In Comparative Example 7, the amount of Zn is outside the lower limit. In Comparative Example 8, the amount of Mg is outside the lower limit. In Comparative Example 9, the amount of Cu is higher than the upper limit, and therefore a large crack was generated during the hot rolling and the production was stopped. In Comparative Example 10, the amount of Zr is outside the upper limit. Accordingly, although these Comparative Examples were produced by a preferable production method and meet the textures after the solutionizing process defined in the present invention, their strengths are too low.

In addition, in Comparative Examples 11 and 12, although the alloy compositions fall with the range of the present invention as shown in Table 1, they are not appropriate since the average heating rate and average cooling rate during the solutionizing process are too low, and the microstructure after the solutionizing process fall outside the range defined in the present invention, and therefore normal equiaxial recrystallized microstructures are formed. That is, their average grain sizes are higher than 15 µm, the average percentage of the low-angle grain boundaries with tilt angles of 5 to 15° is lower than 15%, and the average percentage of the high-angle grain boundaries with tilt angles higher than 15° is lower than 15%. Accordingly, their strength has not been increased even after the artificial aging treatment.

As can be seen from Tables 3 and 4, all invention examples are within the range of the aluminum alloy compositions of the present invention, and are produced with the cold-rolling ratios and the average heating rate and average cooling rate during the solutionizing process being within the above-mentioned preferable ranges. As a result, the invention examples have a texture in which the average grain size is 15 µm or lower as the microstructures after the solutionizing process, and the average total area fraction of crystals with the respective orientations of the Brass orientation, S orientation, and Cu orientation is 30% or higher. As a result, they each have the 0.2% proof stress after the artificial aging treatment of 350 MPa or higher, and preferably 400 MPa or higher, and has excellent SCC resistance. Herein, it is preferable that the total elongation is, as for automobile part, 13.0% or higher.

In contrast, in Comparative Examples, the alloy compositions fall outside the range of the present invention as shown in Table 3. In Comparative Example 36, the amount of Zn is outside the lower limit. In Comparative Example 37, the amount of Mg is outside the lower limit. In Comparative Example 38, the amount of Cu is higher than the upper limit, and therefore a large crack was generated during the hot rolling and the production was stopped. In Comparative Example 39, the amount of Zr is outside the upper limit. Accordingly, although these Comparative Examples were produced by a preferable production method and meet the textures after the solutionizing process defined in the present invention, their strengths are too low.

In addition, in Comparative Examples 40 and 41, although their alloy compositions are within the range of the present invention as shown in Table 3, they are not appropriate since their cold-rolling ratios are too low or their average heating rates and average cooling rates during the solutionizing process are too low. The textures after the solutionizing process have average grain sizes higher than 15 µm, and their average total area fractions of crystals with the respective orientations of the Brass orientation, S orientation, and Cu orientation are lower than 30%. Accordingly, their textures after the solutionizing process fall outside the range defined in the present invention, and therefore normal equiaxial recrystallized microstructures are formed. Accordingly, their strengths have not been increased even after the artificial aging treatment.

The results described above support the critical meanings of the requirements of the present invention for the aluminum alloy sheet of the present invention to achieve higher strength, higher ductility and SCC resistance.

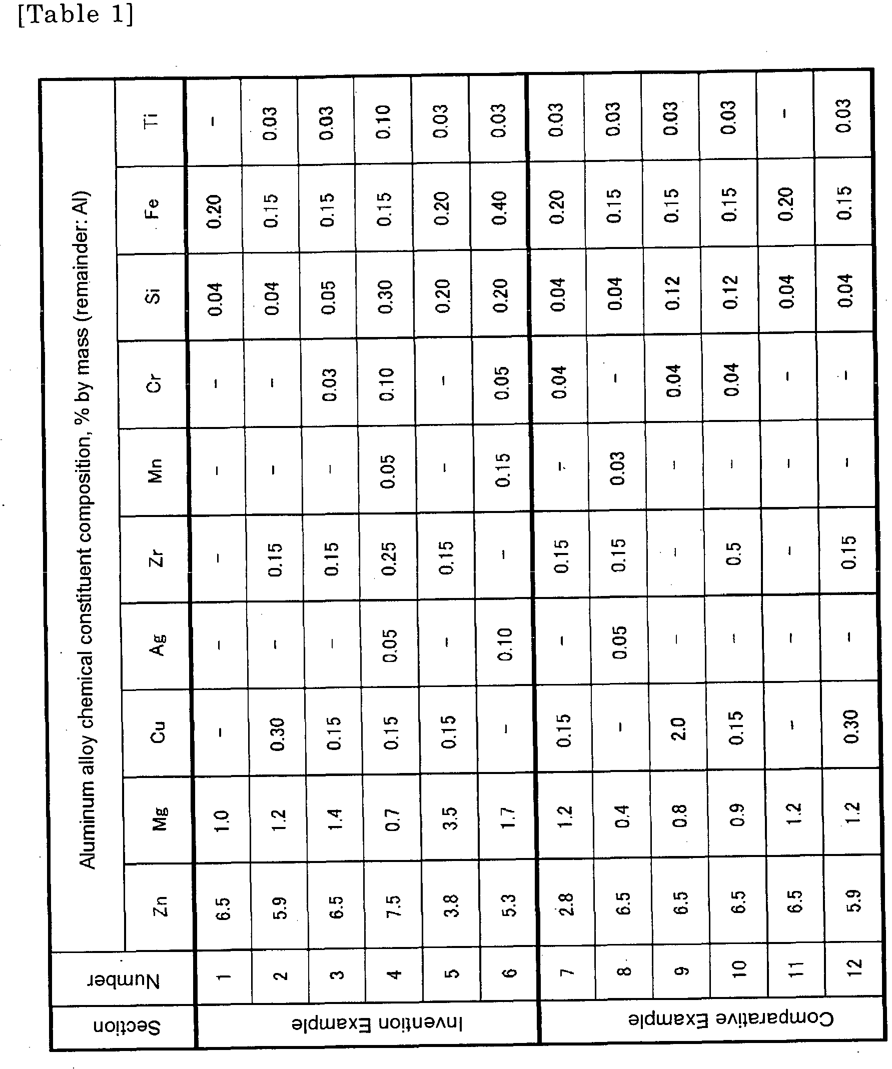

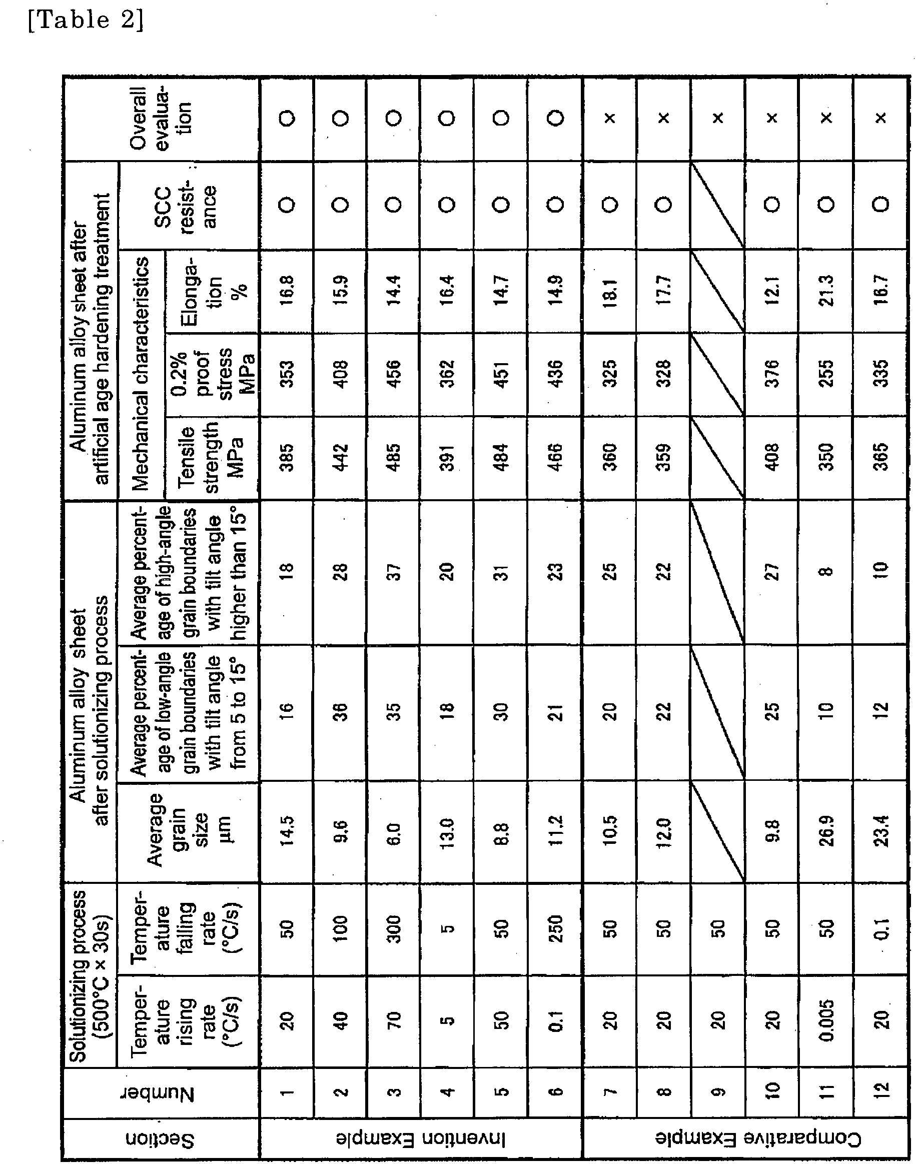

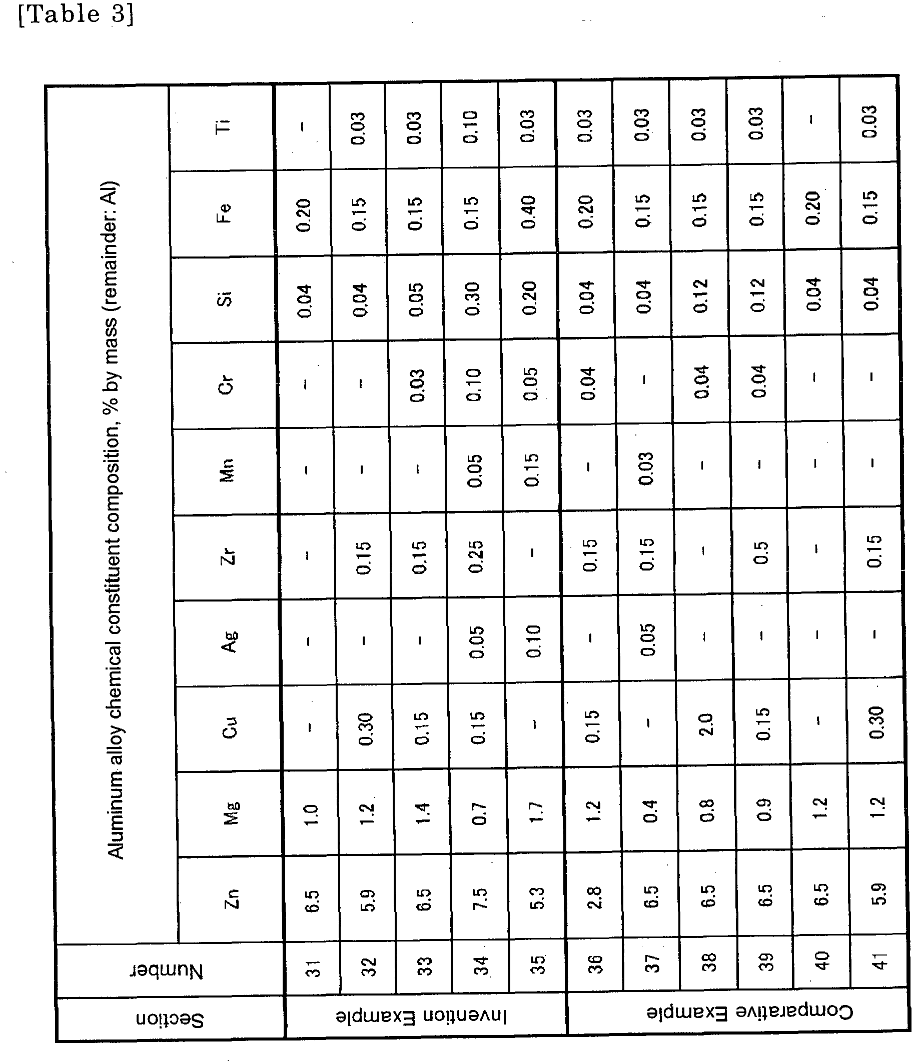

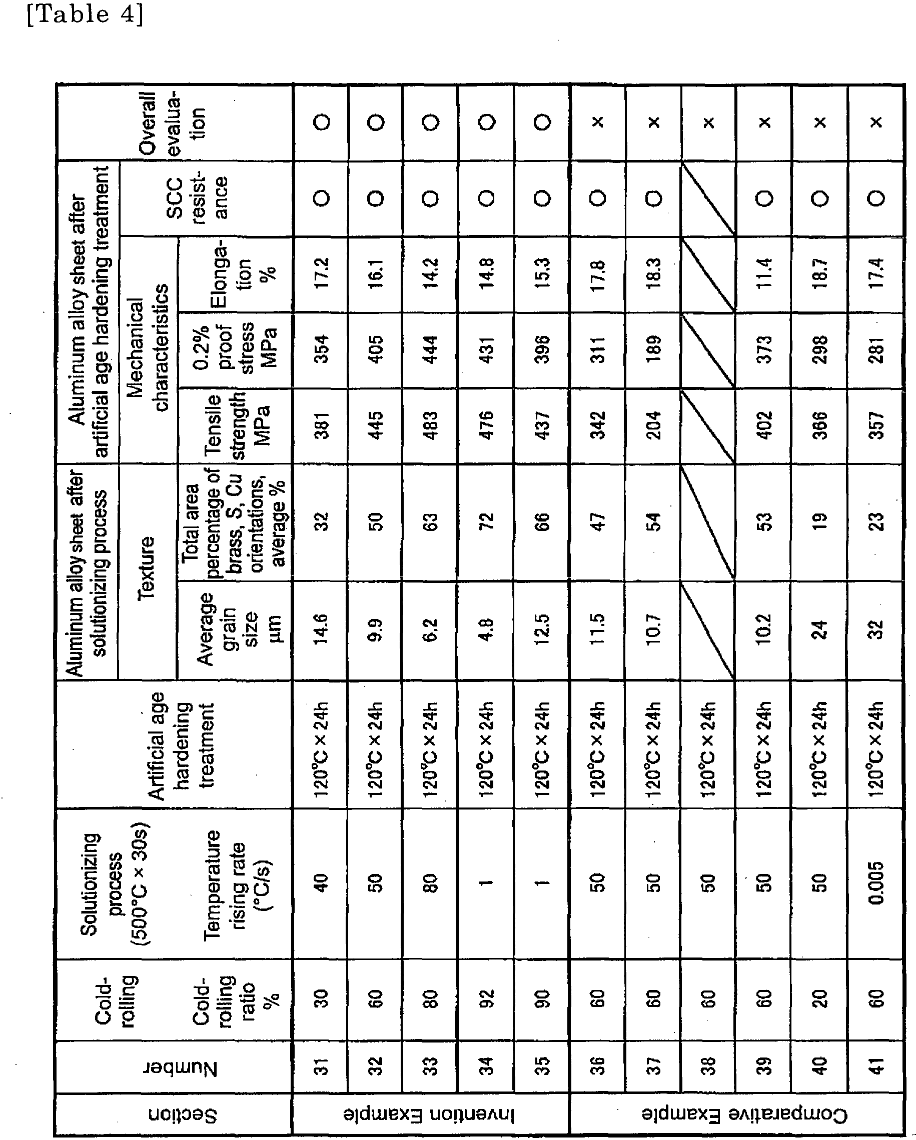

### Industrial Applicability

As described above, the present invention can provide a 7000 series aluminum alloy sheet for automobile part having both strength and stress corrosion crack resistance. Therefore, the present invention is suitable for automobile structural component such as frames and pillars which contribute to the weight reduction in vehicle bodies, and other automobile parts.

## Claims

1. An aluminum alloy sheet for automobile part which is an Al-Zn-Mg alloy sheet having a composition consisting of, by mass %,
Zn: 3.0 to 8.0%, and
Mg: 0.5 to 4.0%,
and optionally one or two elements from Cu: 0.05 to 0.6% and Ag: 0.01 to 0.15%,
and optionally one or more elements from Mn: 0.05 to 0.3%, Cr: 0.03 to 0.2%, and Zr: 0.03 to 0.3%,
and optionally Ti with an upper limit of 0.2%,
and optionally B with an upper limit of 0.05%,
and optionally Fe in a content of 0.5% or lower,
and optionally Si in a content of 0.5% or lower,
with the remainder consisting of Al and inevitable impurities,
(a) having an average grain size of 15 µm or lower, an average percentage of low-angle grain boundaries with tilt angles from 5 to 15° of 15% or higher, and an average percentage of high-angle grain boundaries with tilt angles higher than 15° of 15 to 50 % and/or
(b) having an average grain size of 15 µm or lower, and having an average total area fraction of crystals with the Brass orientation, S orientation, and Cu orientation of 30% or higher.

## Patentansprüche

1. Aluminiumlegierungsblech für ein Kraftfahrzeugteil, welches ein Al-Zn-Mg-Legierungsblech mit einer Zusammensetzung, bestehend aus, in Massen-%,
Zn: 3,0 bis 8,0%, und
Mg: 0,5 bis 4,0%,
und gegebenenfalls einem oder zwei Elementen aus Cu: 0,05 bis 0,6% und Ag: 0,01 bis 0,15%,
und gegebenenfalls einem oder mehreren Elementen aus Mn: 0,05 bis 0,3%, Cr: 0,03 bis 0,2% und Zr: 0,03 bis 0,3%,
und gegebenenfalls Ti mit einer Obergrenze von 0,2%,
und gegebenenfalls B mit einer Obergrenze von 0,05%,
und gegebenenfalls Fe mit einem Gehalt von 0,5% oder weniger,
und gegebenenfalls Si mit einem Gehalt von 0,5% oder weniger,
wobei der Rest aus Al und unvermeidbaren Verunreinigungen besteht, ist,
(a) mit einer mittleren Korngröße von 15 µm oder weniger, einem mittleren prozentualen Anteil von Niedrigwinkelkorngrenzen mit Neigungswinkeln von 5 bis 15° von 15% oder höher und einem mittleren prozentualen Anteil von Hochwinkelkorngrenzen mit Neigungswinkeln größer als 15° von 15 bis 50% und/oder
(b) mit einer mittleren Korngröße von 15 µm oder weniger und mit einem mittleren Gesamtflächenanteil an Kristallen mit der Messingorientierung, S-Orientierung und Cu-Orientierung von 30% oder höher.

## Revendications

1. Plaque d'alliage d'aluminium pour pièce automobile qui est une plaque d'alliage de Al-Zn-Mg présentant une composition constituée de % en masse,
Zn : 3 à 8 %, et
Mg : 0,5 à 4 %,
et en option un ou deux éléments parmi Cu : 0,05 à 0,6 % et Ag : 0,01 à 0,15 %,
et en option un ou plusieurs éléments parmi Mn : 0,05 à 0,3 %, Cr : 0,03 à 0,2 % et Zr : 0,03 à 0,3 %,
et en option Ti avec une limite supérieure de 0,2 %,
et en option B avec une limite supérieure de 0,05 %,
et en option Fe dans une teneur de 0,5 % ou moins,
et en option Si dans une teneur de 0,5 % ou moins,
le reste étant constitué de Al et d'impuretés inévitables,
(a) présentant une granulométrie moyenne de 15 µm ou moins, un pourcentage moyen de limites de grain à angle faible avec des angles d'inclinaison de 5 à 15° de 15 % ou plus, et un pourcentage moyen de limites de grain à angle élevé avec des angles d'inclinaison supérieurs à 15° de 15 à 50 % et/ou
(b) présentant une granulométrie moyenne de 15 µm ou moins, et présentant une fraction de zone totale moyenne de cristaux avec l'orientation laiton, l'orientation S et l'orientation Cu de 30 % ou plus.
